(19) Europäisches Patentamt / European Patent Office / Office européen des brevets

(11) **EP 1 892 038 B1**

(12) **FASCICULE DE BREVET EUROPEEN**

(45) Date de publication et mention
de la délivrance du brevet:
**06.06.2018 Bulletin 2018/23**

(51) Int Cl.:
***B01J 23/882*** *(2006.01)*    ***B01J 23/00*** *(2006.01)*
***B01J 37/02*** *(2006.01)*    ***B01J 37/12*** *(2006.01)*
***C10G 45/00*** *(2006.01)*

(21) Numéro de dépôt: **07290854.4**

(22) Date de dépôt: **06.07.2007**

(54) **Procédé de préparation d'une solution d'un sel d'un heteropolyanion d'anderson combinant dans sa structure le molybdene et le cobalt ou le nickel**

Verfahren zur Herstellung einer Lösung eines Salzes von einem Anderson-Heteropolyanion, das in seiner Struktur Molybdän und Kobalt oder Nickel vereint

Method of preparing a solution of a salt of an Anderson's heteropolyanion combining molybdenum and cobalt or nickel in its structure

(84) Etats contractants désignés:
**BE DE DK FR GB NL**

(30) Priorité: **24.07.2006 FR 0606828**

(43) Date de publication de la demande:
**27.02.2008 Bulletin 2008/09**

(73) Titulaire: **IFP Energies nouvelles
92500 Rueil-Malmaison (FR)**

(72) Inventeurs:
• **Payen, Edmond
59144 Jenlain (FR)**
• **Guillaume, Denis
38200 Vienne (FR)**
• **Lamonier, Carole
59280 Armentieres (FR)**

• **Marchand, Karin
69008 Lyon (FR)**

(56) Documents cités:
**EP-A- 0 565 205     FR-A1- 2 843 050**

• **C. MARTIN ET AL.: "Evidence and characterization of a new decamolybdocobaltate cobalt salt: an efficient precursor for hydrotreatment catalyst preparation" CHEM MATER, vol. 17, 2005, pages 4438-4448, XP002420874**
• **C. I. CABELLO ET AL.: "Decamolybdodicobaltate(III) heteropolyanion: structural, spectroscopical, thermal and hydrotreating catalytic properties" J. MOL. CAT. A, vol. 186, 2002, pages 89-100, XP002420875**

EP 1 892 038 B1

**Description**

La présente invention se rapporte au domaine des catalyseurs contenant au moins du molybdène et au moins un métal du groupe VIII choisi parmi le nickel et le cobalt et préparés à partir d'au moins un sel de cobalt et/ou de nickel d'au moins un hétéropolyanion de type Anderson. Plus précisément, la présente invention se rapporte à la préparation d'une solution formée d'au moins un sel de cobalt et/ou de nickel d'au moins un hétéropolyanion combinant dans sa structure au moins du molybdène et du cobalt ou au moins du molybdène et du nickel. La présente invention se rapporte également à l'utilisation de ladite solution pour la préparation de catalyseurs, notamment de catalyseurs d'hydrotraitement pour l'hydroraffinage et/ou l'hydroconversion de charges hydrocarbonées telles que les coupes pétrolières, les coupes issues du charbon ou les hydrocarbures produits à partir du gaz naturel et plus particulièrement de charges hydrocarbonées contenant des hétéroatomes. L'hydroraffinage inclut les réactions d'hydrogénation, d'hydrodéazotation, d'hydrodéoxygénation, d'hydrodéaromatisation, d'hydrodésulfuration, d'hydrodémétallisation, d'hydroisomérisation, d'hydrodéalkylation et de déshydrogénation.

L'hydroraffinage des charges hydrocarbonées telles que les coupes pétrolières soufrées prend une importance de plus en plus grande dans la pratique du raffinage avec la nécessité croissante de réduire la quantité de soufre présente dans les produits pétroliers et de convertir des fractions lourdes en fractions plus légères valorisables en tant que carburants. Cet état de fait tient d'une part à l'intérêt économique de valoriser au mieux des bruts importés de plus en plus riches en fractions lourdes, pauvres en hydrogène et riches en hétéroatomes, dont l'azote et le soufre, et d'autre part aux spécifications imposées dans les divers pays pour les carburants commerciaux.

Les procédés actuels d'hydroraffinage catalytique utilisent des catalyseurs capables de promouvoir les principales réactions utiles à la mise en oeuvre de ces coupes, en particulier l'hydrogénation des noyaux aromatiques (HAR), l'hydrodésulfuration (HDS), l'hydrodéazotation (HDN) et autres hydroéliminations. L'hydroraffinage est employé pour traiter des charges telles que les essences, les gazoles, les gazoles sous vide, les résidus atmosphériques ou sous vide, désasphaltés ou non. Il est tout aussi indiqué pour le prétraitement des charges des procédés de craquage et d'hydrocraquage catalytique. Au moins une étape d'hydroraffinage est habituellement intégrée dans chacun des schémas connus de valorisation des coupes pétrolières.
Le contexte de la présente invention, résumé ci-dessus, est bien connu de l'homme du métier.

Le problème posé à l'homme du métier est l'obtention de hautes performances catalytiques des procédés d'hydroraffinage catalytique, notamment en terme d'activité, et particulièrement pour les procédés d'hydrodésulfuration, tout en garantissant une réalisation industriellement satisfaisante.

Il est maintenant admis que les précurseurs oxydes contenant des hétéropolyanions associant au sein de la même molécule au moins un élément du groupe VI, en général le molybdène et/ou le tungstène, et au moins un élément du groupe VIII, en général le cobalt et/ou le nickel conduisent, après sulfuration, à des catalyseurs dont l'activité catalytique est nettement supérieure à celle des catalyseurs préparés à partir de précurseurs standards ne contenant pas ces hétéropolyanions. L'origine de cette meilleure activité est liée à un meilleur effet de promotion de l'élément du groupe VI, en général le molybdène et/ou le tungstène, par l'élément du groupe VIII, en général le cobalt et/ou le nickel, après l'étape d'activation par sulfuration. Supportés sur une matrice poreuse, ces précurseurs oxydes à base d'hétéropolyanions permettent également d'augmenter significativement la dispersion de la phase active, ce qui est également favorable pour l'activité catalytique.

Les conséquences sur l'activité catalytique de cette association entre les éléments des groupes VI et VIII au sein de la même structure moléculaire, sont notamment reportées dans les documents US 2 547 380, FR-A-2,759,778 et EP-A-1 393 802 et publiées dans la littérature scientifique internationale, notamment dans les articles issus de Journal of Catalysis, 1999, volume 188 (1), pages 102-110, de Applied Catalysis A : General 2001, volume 220, pages 113-121 et de Chemistry Materials, 2005, volume 17, page 4438 à 4448.
Parmi les hétéropolyanions, ceux à structure d'Anderson combinant dans la même structure le molybdène et le cobalt ou le molybdène et le nickel, permettent, lorsqu'ils sont sous forme de sels de cobalt ou de nickel, d'atteindre un rapport atomique promoteur (Co et/ou Ni) / Mo compris entre 0,4 et 0,6, c'est-à-dire proche ou égal au rapport optimal, connu de l'homme du métier, pour maximiser les performances des catalyseurs d'hydrotraitement. A titre d'exemple, les sels de $Co^{II}$ ou de $Ni^{II}$ de l'ion momomérique 6-molybdocobaltate (de formule $Co^{II}_{3/2}[Co^{III}Mo_6O_{24}H_6]$ ou $Ni^{II}_{3/2}[Co^{III}Mo_6O_{24}H_6]$) et les sels de $Co^{II}$ ou de $Ni^{II}$ de l'ion dimérique decamolybdocobaltate (de formule $Co^{II}_3[Co^{III}_2Mo_{10}O_{38}H_4]$ ou $Ni^{II}_3[Co^{III}_2Mo_{10}O_{38}H_4]$ se caractérisent par des rapports atomiques promoteurs (Co et/ou Ni) / Mo respectivement de 0,41 et 0,5. De même à titre d'exemple, les sels de $Co^{II}$ ou de $Ni^{II}$ de l'ion 6-molybdonickellate (de formule $Ni^{II}_2[Ni^{II}Mo_6O_{24}H_6]$) et les sels de $Co^{II}$ ou de $Ni^{II}$ de l'ion dimérique decamolybdonickellate (de formule $Ni^{II}_4[Ni^{II}_2Mo_{10}O_{38}H_4]$) se caractérisent par des rapports atomiques promoteurs (Co et/ou Ni) / Mo respectivement de 0,5 et 0,6.
Les sels de $Ni^{II}$ ou de $Co^{II}$ des hétéropolyanions à structure d'Anderson, qui combinent dans la même structure le molybdène et le cobalt ou le molybdène et le nickel, peuvent être caractérisés par les techniques de spectroscopie Raman, de spectroscopie UV-visible, de spectroscopie d'absorption des rayons X et de résonance magnétique nucléaire.

Selon EP-A- 1 393 802, ces sels conduisent, lorsqu'ils sont supportés sur une matrice poreuse d'un catalyseur d'hydrotraitement utilisé dans des procédés d'hydroraffinage et d'hydroconversion, en particulier dans des procédés d'hydrogénation des hydrocarbures aromatiques, d'hydrodésulfuration et d'hydrodéazotation, à des activités catalytiques plus importantes que celles des formules catalytiques dépourvues de sels d'hétéropolyanions à structure Anderson.

Les hétéroplyanions à structure Anderson sont connus par l'Homme du métier. Les isopolyanions, notés $M_kO_y^{t-}$ sont obtenus par condensation d'oxoanions $MO_4^{n-}$, où M est un atome métallique. La condensation apparaît par acidification du milieu et il y a alors élimination de molécules d'eau et création de ponts oxo entre les atomes métalliques. Les composés molybdiques sont bien connus pour ce genre de réactions, puisque selon le pH, le composé molybdique en solution peut se présenter sous la forme $MoO_4^{2-}$ ou sous la forme d'un isopolyanion d'Anderson $Mo_7O_{24}^{6-}$ obtenu selon la réaction : $7\ MoO_4^{2-} + 8\ H^+ \rightarrow Mo_7O_{24}^{6-} + 4\ H_2O$. En présence d'un oxoanion $XO_4^{p-}$, où X est un atome différent de M, les atomes métalliques s'associent autour de cet oxoanion et la polycondensation conduit alors à une espèce mixte appelée hétéropolyanion et notée $X_xM_kO_y^{z-}$. Les réactions de formation de ces polyoxométallates (POM) sont régies par différents facteurs expérimentaux comme le pH, la concentration des espèces en solution, la nature du solvant, et le rapport du nombres d'atomes métalliques M/X. Une structure particulière dans le cas où M/X = 6, $XM_6O_{24}^{n-}$ a été proposée par Anderson (revue Nature, n° 140 page 850 publié en 1937); elle comprend 7 octaèdres situés dans un même plan et reliés entre eux par les arêtes : 6 octaèdres entourent l'octaèdre central contenant l'hétéroatome. Les hétéropolyanions $Co^{III}Mo_6O_{24}H_6^{3-}$ et $Ni^{II}Mo_6O_{24}H_6^{4-}$ sont de bons exemples d'hétéropolyanions d'Anderson.

La préparation de sels d'hétéropolyanions nécessitent, selon EP-A- 1 393 802 ou FR2 813 050, des étapes élémentaires dont certaines sont longues et difficiles à mettre en oeuvre à l'échelle industrielle. La méthode de préparation décrite dans EP-A- 1 393 802 peut être qualifiée de méthode indirecte car elle consiste à préparer le sel d'ammonium de l'hétéropolyanion nécessitant la mise en oeuvre d'étapes de précipitation, de filtration et de cristallisation, puis à échanger en solution les ions ammonium de l'hétéropolyanion par des cations cobalt ou nickel, par ajout dans le milieu réactionnel d'un composé dont l'anion forme avec les cations ammonium un composé très insoluble qui précipite et qui est séparé de la solution contenant les cations cobalt et/ou nickel et l'hétéropolyanion. On obtient ensuite les sels cristallisés de Co ou de Ni de l'hétéropolyanion par cristallisation. Ces sels, redissouts ensuite dans l'eau, peuvent constituer des solutions d'imprégnation, pour la préparation de la phase oxyde de catalyseurs d'hydrotraitement supportés, par la technique d'imprégnation à sec bien connue de l'homme du métier. Cette préparation indirecte a été publiée dans la littérature internationale pour la préparation du sel de $Co^{II}$ de l'ion dimérique decamolybdocobaltate (de formule $Co^{II}_3[Co^{III}_2Mo_{10}O_{38}H_4]$) dans la revue Chemistry Materials, en 2005, volume 17 page 4438 à 4448. Il est à noter que l'obtention de la forme dimérique des hétéropolyanions d'Anderson, selon cette méthode de préparation dite indirecte, nécessite en outre l'emploi d'un agent dimérisant comme le charbon actif ou le nickel de Raney. Par ailleurs, les composés utilisés pour la réaction d'échange sont généralement les sels de cobalt ou de nickel de l'acide phosphomolybdique, sels dont la préparation nécessite également un certain nombre d'étapes élémentaires longues et difficiles à mettre en oeuvre à l'échelle industrielle (neutralisation, réaction d'échange, filtration et cristallisation). D'autre part, cette méthode implique de remettre en solution le sel d'ammonium de l'hétéropolyanion. Or, comme il est rapporté dans la revue Inorganic Chemistry, volume 43 page 4636 publiée en 2004, celui-ci a une solubilité plus faible que le sel de cobalt équivalent (0,17 mol de Mo par litre de solution pour le sel d'ammonium contre 1,08 mol de Mo par litre de solution dans le cas du sel de cobalt). Ceci implique donc, lorsque des catalyseurs à forte teneur en phase active sont visés ($MoO_3$ >16 % poids), de reconcentrer la solution ou de faire une imprégnation en deux étapes, ce qui rend d'autant plus difficile la mise en oeuvre d'une telle méthode de préparation au niveau industriel.

Pour remédier à ces inconvénients, la présente invention se propose de fournir une nouvelle méthode de préparation d'au moins un sel de cobalt et / ou de nickel d'au moins un hétéropolyanion d'Anderson combinant dans sa structure au moins du molybdène et du cobalt ou au moins du molybdène et du nickel. Ladite nouvelle méthode est simplifiée et nécessite bien moins d'étapes pour la préparation d'au moins dudit sel d'au moins dudit hétéropolyanion d'Anderson que celle connue dans l'état de la technique. Elle présente de plus l'avantage de conduire à au moins un sel de cobalt et / ou de nickel d'au moins un hétéropolyanion d'Anderson combinant dans sa structure au moins du molybdène et du cobalt ou au moins du molybdène et du nickel dans lequel la teneur en $MoO_3$ peut être sensiblement augmentée en raison d'une meilleure solubilité dudit sel par rapport aux sels préparés par la voie indirecte décrite ci-dessus. Il en résulte la préparation de précurseurs catalytiques présentant une quantité de phase active constituée par $MoO_3$ sensiblement augmentée ; le(s)dit(s) sel(s) présent(s) en solution est(sont) utilisé(s) pour la préparation de la phase oxyde de catalyseurs supportés, notamment de catalyseurs d'hydrotraitement supportés ou pour la préparation de catalyseurs massiques, notamment de catalyseurs d'hydrotraitement massiques, après leur cristallisation.

A l'état supporté et à l'état massique, le(s) sel(s) de Co et / ou de Ni des hétéropolyanions d'Anderson préparé(s) selon la présente invention conservent après séchage à une température inférieure à 150°C leurs signatures spectroscopiques Raman et UV-visible (reflectance diffuse) et conduisent, à iso mise en oeuvre (supporté ou massique), par exemple à iso-teneur en phase active ou à iso-teneur en volume, à des catalyseurs d'hydrotraitement présentant des performances catalytiques identiques voire supérieures à celles obtenues par des catalyseurs préparés à partir de sels d'hétéroplyanions synthétisés par voie indirecte.

Description de l'invention

La présente invention a pour objet un procédé de préparation d'une solution formée d'au moins un sel de cobalt et/ou de nickel d'au moins un hétéropolyanion combinant dans sa structure du molybdène et du cobalt ou du molybdène et du nickel, ledit procédé de préparation comprenant :

a) le mélange en solution aqueuse d'au moins une source de molybdène et d'au moins un composé oxydant jusqu'à l'obtention d'une solution aqueuse limpide présentant un pH inférieur à 5 conduisant à la formation à pH acide d'ions peroxomolybdates, le rapport molaire (composé oxydant / source de molybdène) étant compris entre 0,1 et 20, la source de molybdène utilisée étant l'oxyde de molybdène $MoO_3$, ledit composé oxydant étant le peroxyde d'hydrogène,

b) l'introduction d'au moins un précurseur du cobalt et/ou d'au moins un précurseur de nickel dans la solution issue de l'étape a) de manière à former une solution comprenant au moins ledit sel dans lequel le rapport molaire (Co + Ni) / Mo soit compris entre 0,25 et 0,85.

Conformément au procédé de l'invention, l'étape a) conduit à la synthèse d'ions peroxomolybdates. Les ions peroxomolybdates synthétisés au cours de l'étape a) du procédé selon l'invention appartiennent au groupe constitué par l'entité peroxomolybdate monomérique $MoO_3(O_2)^{2-}$, l'entité peroxomolybdate dimérique $Mo_2O_3(O_2)_4^{2-}$ et les espèces intermédiaires di-, tri- et tétra-peroxomolybdates monomériques, de formule $MoO_2(O_2)_2^{2-}$, $MoO(O_2)_3^{2-}$ et $Mo(O_2)_4^{2-}$ et leurs mélanges. De manière préférée, les conditions de synthèse sont adaptées au cours de l'étape a) pour préparer des ions peroxomolybdates dimériques, dont les raies principales en spectroscopie Raman sont situées à 540 $cm^{-1}$ et 970 $cm^{-1}$. Les ions peroxomolybdates monomériques se caractérisent en spectroscopie Raman par des raies principales situées à 560 et 930 $cm^{-1}$ et les espèces intermédiaires di-, tri- et tétra-peroxomolybdates monomériques se caractérisent par des raies intermédiaires, comprises entre 540 et 560 $cm^{-1}$ et entre 930 et 970 $cm^{-1}$, et correspondant à des modes d'élongation.

Ladite étape a) du procédé selon l'invention est réalisée en mélangeant, en solution aqueuse, au moins une source de molybdène et au moins un composé oxydant, la source de molybdène utilisée étant l'oxyde de molybdène $MoO_3$, ledit composé oxydant étant le peroxyde d'hydrogène. Le mélange est effectué jusqu'à l'obtention d'une solution aqueuse limpide dans laquelle la source de molybdène est entièrement dissoute par l'action dudit composé oxydant. Ce mélange peut être réalisé sous agitation à température ambiante ou être chauffé à reflux entre 30 et 90°C, de préférence entre 50 et 60°C, pendant quelques minutes à plusieurs heures jusqu'à l'obtention d'une solution aqueuse limpide. Ladite solution limpide, obtenue à l'issue de l'étape a) et contenant lesdits ions peroxomolybdates, présente un pH acide, plus précisément un pH inférieur à 5, préférentiellement inférieur à 2,5, très préférentiellement inférieur à 1 et de manière encore plus préférée inférieur à 0,5. La source de molybdène employée pour la mise en oeuvre de ladite étape a) du procédé de préparation selon l'invention est l'oxyde de molybdène $MoO_3$.

Le composé oxydant employé pour la mise en oeuvre de ladite étape a) du procédé de préparation selon l'invention est le peroxyde d'hydrogène $H_2O_2$.

Conformément à l'étape a) du procédé selon l'invention, ledit composé oxydant et la source de molybdène sont mélangés en solution aqueuse dans des proportions telles que le rapport molaire entre le composé oxydant et la source de molybdène soit compris entre 0,1 et 20, avantageusement compris entre 0,5 et 10 et très avantageusement compris entre 2 et 7. Conformément à l'étape b) du procédé de préparation selon l'invention, au moins un précurseur de cobalt et/ou au moins un précurseur de nickel est(sont) introduit(s) dans la solution aqueuse limpide, ayant un pH acide, issue de ladite étape a) pour former une solution comprenant au moins un sel de cobalt et/ou de nickel d'au moins un hétéropolyanion combinant dans sa structure du molybdène et du cobalt ou du molybdène et du nickel. Ladite solution obtenue à l'issue de l'étape b) du procédé selon l'invention présente un pH supérieur à 3, de préférence supérieur ou égal à 3,5 et de manière très préférée compris entre 3,5 et 4,0. De manière préférée, ladite étape b) conduit à la formation d'une solution comprenant au moins un sel de cobalt ou de nickel d'au moins un hétéropolyanion combinant dans sa structure du molybdène et du cobalt ou du molybdène et du nickel, ledit sel appartenant au groupe constitué par les sels $Co^{II}_{3/2}[Co^{III}Mo_6O_{24}H_6]$, $Ni^{II}_{3/2}[Co^{III}Mo_6O_{24}H_6]$, $Co^{II}_3[Co^{III}_2Mo_{10}O_{38}H_4]$, $Ni^{II}_3[Co^{III}_2Mo_{10}O_{38}H_4]$, $Ni^{II}_2[Ni^{II}Mo_6O_{24}H_6]$ et $Ni^{II}_4[Ni^{II}_2Mo_{10}O_{38}H_4]$.

Les précurseurs de cobalt et/ou de nickel introduits dans la solution contenant les ions peroxomolybdates issue de l'étape a) sont choisis dans le groupe constitué par les nitrates, les sulfates, les phosphates, les halogénures, les carboxylates comme les acétates, les carbonates, les hydroxydes et les oxydes. De manière préférée, on utilise les précurseurs à base de carbonate, les précurseurs à base d'hydroxyde et les précurseurs hydroxycarbonatés. Le précurseur de cobalt préféré est le carbonate de cobalt et le précurseur de nickel préféré est l'hydroxycarbonate de nickel.

Selon l'invention, les précurseurs de cobalt et/ou de nickel sont avantageusement introduits dans la solution issue de l'étape a), préférentiellement après refroidissement de celle-ci à température ambiante dans le cas où la dissolution a été menée à température plus élevée que la température ambiante. L'introduction desdits précurseurs est réalisée avec précaution et de façon contrôlée pour limiter les exothermies et les effervescences liées à l'utilisation de certains précurseurs, notamment ceux à base de carbonate. Il est préféré de ne pas introduire les précurseurs de cobalt et/ou de nickel en présence d'un acide fort notamment $H_2SO_4$, $HNO_3$ et HCl ou d'un acide organique, en particulier l'acide citrique. Selon un premier mode de réalisation de l'étape b) du procédé selon l'invention, au moins un précurseur de cobalt est introduit dans ladite solution issue de l'étape a), en l'absence de précurseur de nickel, de manière à former au moins un sel de cobalt d'au moins un hétéropolyanion combinant dans sa structure du molybdène et du cobalt. Le précurseur de cobalt est introduit dans une quantité telle que le rapport molaire Co/Mo soit compris entre 0,40 et 0,85, de préférence entre 0,40 et 0,55. Les sels préparés selon ce premier mode de réalisation sont notamment le sel $Co^{II}_{3/2}[Co^{III}Mo_6O_{24}H_6]$ correspondant à l'hétéropolyanion d'Anderson monomère $(Co^{III}Mo_6O_{24}H_6)^{3-}$ et le sel $Co^{II}_3[Co^{III}_2Mo_{10}O_{38}H_4]$ correspondant à l'hétéropolyanion d'Anderson dimère $(Co^{III}_2Mo_{10}O_{38}H_4)^{6-}$. Ils peuvent être présents seuls ou en mélange dans ladite solution issue de l'étape b). La préparation de tels sels utilise préférentiellement le carbonate de cobalt $Co(Co_3)_2$ comme précurseur de cobalt.

Selon un deuxième mode de réalisation de l'étape b) du procédé selon l'invention, au moins un précurseur de nickel est introduit dans ladite solution issue de l'étape a), en l'absence de précurseur de cobalt, de manière à former au moins un sel de nickel d'au moins un hétéropolyanion combinant dans sa structure du molybdène et du nickel. Le précurseur de nickel est introduit dans une quantité telle que le rapport molaire Ni/Mo soit compris entre 0,40 et 0,85, de préférence entre 0,45 et 0,65. Les sels préparés selon ce deuxième mode de réalisation sont notamment le sel $Ni^{II}_2[Ni^{II}Mo_6O_{24}H_6]$ correspondant à l'hétéropolyanion d'Anderson monomère $(Ni^{II}Mo_6O_{24}H_6)^{4-}$ et le sel $Ni^{II}_4[Ni^{II}_2Mo_{10}O_{38}H_4]$ correspondant à l'hétéropolyanion d'Anderson dimère $(Ni^{II}_2Mo_{10}O_{38}H_4)^{8-}$. Ils peuvent être présents seuls ou en mélange dans ladite solution issue de l'étape b). La préparation de tels sels utilise préférentiellement l'hydroxycarbonate de nickel comme précurseur de nickel.

Selon un troisième mode de réalisation de l'étape b) du procédé selon l'invention, au moins un précurseur de cobalt et au moins un précurseur de nickel sont introduits dans ladite solution limpide issue de l'étape a). De manière préférée, ladite étape b) est réalisée par l'introduction dans ladite solution issue de l'étape a) d'au moins un précurseur de nickel suivie de l'introduction d'au moins un précurseur de cobalt. Les précurseurs de cobalt et de nickel sont introduits dans une proportion telle que le rapport molaire (Co+Ni)/Mo soit compris entre 0,25 et 0,85 et de manière préférée entre 0,28 et 0,55. Le précurseur de nickel est introduit dans une proportion telle que le rapport molaire Ni/Mo soit compris entre 0,20 et 0,40, de préférence entre 0,25 et 0,35. Le précurseur de cobalt est introduit dans une proportion telle que le rapport molaire Co/Mo soit compris entre 0,10 et 0,30, de préférence entre 0,15 et 0,25. Les sels préparés selon ce troisième mode de réalisation sont notamment le sel $Ni^{II}_{3/2}[Co^{III}Mo_6O_{24}H_6]$ correspondant à l'hétéropolyanion d'Anderson monomère $(Co^{III}Mo_6O_{24}H_6)^{3-}$ et le sel $Ni^{II}_3[Co^{III}_2Mo_{10}O_{38}H_4]$ correspondant à l'hétéropolyanion d'Anderson dimère $(Co^{III}_2Mo_{10}O_{38}H_4)^{6-}$. Ils peuvent être présents seuls ou en mélange dans ladite solution issue de l'étape b). La préparation de tels sels utilise préférentiellement l'hydroxycarbonate de nickel comme précurseur de nickel et le carbonate de cobalt comme précurseur de cobalt.

Selon l'invention, la présence en solution d'au moins un sel de Co et/ou de Ni d'au moins un hétéropolyanion d'Anderson monomériques $(Co^{III}Mo_6O_{24}H_6^{3-}, Ni^{II}Mo_6O_{24}H_6^{4-})$ et dimériques $(Co^{III}_2Mo_{10}O_{38}H_4^{6-}, Ni^{II}_2Mo_{10}O_{38}H_4^{8-}]$ peut être caractérisée par spectroscopie Raman grâce aux déplacements relatifs aux modes d'élongation des liaisons Mo-O$_{2t}$ à 903, 920, 952 cm$^{-1}$ pour les hétéropolyanions d'Anderson monomériques et à 917 et 957 cm$^{-1}$ pour les hétéropolyanions d'Anderson dimériques. De même en spectroscopie Raman, les déplacements correspondant aux modes de vibration des liaisons Mo-O-X (avec X= Co ou Ni) sont situés à 560 et 575 cm$^{-1}$ pour les espèces monomériques et à 565 et 602 cm$^{-1}$ pour les espèces dimériques. En solution, dans le cas des sels de Co et/ou de Ni des hétéropolyanions d'Anderson à base de molybdène et de cobalt, le cobalt au degré d'oxydation + 3 dans la structure de l'hétéroployanion d'Anderson est en outre discernable, par spectroscopie UV-visible, du cobalt ou du nickel au degré d'oxydation +2 présent en tant que contre-ion dans le sel. Le Co$^{2+}$ ou le Ni$^{2+}$ se caractérise en effet par une bande d'absorption à 510-515 nm correspondant à la transition $^4T_{2g}{\rightarrow}^4T_{1g}$ du Co$^{2+}$ (d7) ou du Ni$^{2+}$ (d7s1) en environnement octaédrique tandis que le Co$^{3+}$ se caractérise par 2 bandes d'absorption à 410 et 600 nm attribuées aux deux transitions d-d du Co$^{3+}$ (d6) en coordination octaédrique respectivement $^1A_{1g}{\rightarrow}^1T_{2g}$ et $^1A_{1g}{\rightarrow}^1T_{1g}$.

Le(s) sel(s) de Co et/ou de Ni d'au moins un hétéropolyanion d'Anderson combinant dans sa structure le molybdène et le cobalt ou le molybdène et le nickel préparé(s) selon le procédé de la présente invention présentent les mêmes caractéristiques Raman et UV visibles que celles présentées par les sels des hétéropolyanions préparés selon la méthode indirecte décrite dans EP-A-1.393.802.

Conformément au procédé de l'invention, aucune étape ne conduit à la formation d'un sel d'ammonium de l'hétéropolyanion désiré.

Un procédé de préparation d'une solution formée d'au moins un sel de cobalt et/ou de nickel d'au moins un hétéropolyanion d'Anderson combinant dans sa structure au moins du molybdène et du cobalt ou au moins du molybdène et du nickel particulièrement préféré selon l'invention consiste à mélanger en solution aqueuse de l'oxyde de molybdène $MoO_3$ et du peroxyde d'hydrogène, le rapport molaire $MoO_3/H_2O_2$ étant compris entre 2 et 7 et le pH de la solution limpide obtenue après dissolution complète de l'oxyde de molybdène par action du peroxyde d'hydrogène étant inférieur à 2,5,

EP 1 892 038 B1

de préférence inférieur à 0,5, puis à introduire du carbonate de cobalt, à température ambiante, dans ladite solution limpide et dans une proportion telle que le rapport molaire Co/Mo soit compris entre 0,25 et 0,85, de préférence entre 0,28 et 0,55, le pH de la solution après dissolution complète du carbonate de cobalt étant supérieur à 3, de préférence supérieur ou égal à 3,5. La concentration en molybdène des solutions ainsi préparées est égale à 2,6 moles de molybdène par litre de solution. A titre de comparaison, la préparation indirecte, conforme au brevet EP-A- 1 393 802 ne permet d'obtenir qu'une solution de concentration 1,8 moles de molybdène par litre de solution pour la forme dimère $Co_2Mo_{10}O_{38}H_4^{6-}$ et 1,06 pour la forme $CoMo_6O_{24}H_6^{3-}$.

La présente invention décrit l'utilisation de la solution formée d'au moins un sel de cobalt et/ou de nickel d'au moins un hétéropolyanion d'Anderson combinant dans sa structure du molybdène et du cobalt ou du molybdène et du nickel et préparée selon le procédé de l'invention pour la préparation de catalyseurs en particulier de catalyseurs d'hydrotraitement. Plus précisément, la solution formée d'au moins dudit sel obtenue selon le procédé de l'invention décrit précédemment est avantageusement utilisée en tant que solution d'imprégnation pour la préparation de la phase oxyde de catalyseurs supportés, notamment de catalyseurs d'hydrotraitement supportés, ou en tant que source, après cristallisation, de sels cristallisés utilisables pour la préparation de catalyseurs massiques, notamment de catalyseurs d'hydrotraitement massiques.

La préparation d'un catalyseur supporté utilisant la solution formée d'au moins dudit sel comme solution d'imprégnation peut être réalisée de façon conventionnelle par toute technique connue de l'Homme du métier, l'introduction de ladite solution pouvant être réalisée avant, pendant ou après la mise en forme du support selon les méthodes bien connues de l'Homme du métier. Une méthode préférée de préparation d'un tel catalyseur supporté consiste a) à introduire, par imprégnation à sec, la solution formée d'au moins dudit sel de cobalt et/ou de nickel d'au moins un hétéropolyanion combinant dans sa structure du molybdène et du cobalt ou du molybdène et du nickel sur un support mis en forme, b) à laisser reposer le solide humide sous une atmosphère saturée en eau à une température comprise entre 10 et 80°C, c) à sécher le solide obtenu à l'étape b) à une température comprise entre 10 et 150°C, de préférence comprise entre 30 et 135°C. Le catalyseur séché obtenu à l'étape c) est avantageusement soumis à un deuxième traitement thermique réalisé à une température comprise entre 80 et 800°C, préférentiellement entre 150 et 600°C et très préférentiellement compris entre 200 et 550°C, sous atmosphère oxydante (par exemple air ou oxygène), neutre (par exemple azote ou argon) ou réductrice (par exemple hydrogène).

Le support présent dans le catalyseur supporté préparé selon le procédé décrit ci-dessus est formé d'au moins une matrice minérale poreuse, habituellement amorphe ou mal cristallisée. Cette matrice est habituellement choisie dans le groupe formé par l'alumine, la silice, la silice-alumine, la magnésie, l'argile, l'oxyde de titane, l'oxyde de bore, l'oxyde de zirconium, l'oxyde de lanthane, l'oxyde de cérium, les phosphates d'aluminium, les phosphates de bore, ou un mélange d'au moins deux des oxydes cités ci-dessus, les combinaisons alumine-oxyde de bore, les mélanges alumine-oxyde de titane, alumine-zircone et oxyde de titane-zircone sont particulièrement préférées. On peut choisir également les aluminates, et par exemple les aluminates de magnésium, de calcium, de baryum, de manganèse, de fer, de cobalt, de nickel, de cuivre et de zinc, les aluminates mixtes et par exemple ceux contenant au moins deux des métaux cités ci-dessus. On peut choisir également les titanates, et par exemple les titanates de zinc, nickel, cobalt. De manière préférée, on utilise des matrices contenant de l'alumine, sous toutes ses formes connues de l'homme du métier, par exemple l'alumine gamma. On peut aussi avantageusement utiliser des mélanges d'alumine et de silice et des mélanges d'alumine et d'oxyde de bore.

Il est également possible d'utiliser un support dopé à base d'alumine gamma dont les propriétés ont été modifiées au moment du malaxage du gel de boehmite avec tout précurseur d'élément permettant d'inhiber le frittage de l'alumine lors de la calcination, comme le phosphore, le molybdène, le bore. Plus précisément, le gel de boehmite choisi comme matrice est comalaxé avec de l'acide phosphorique ou tout précurseur du groupe VIB, le mélange étant ensuite mis en forme puis calciné conduit à un support dopé à base d'alumine gamma, approprié pour la préparation de catalyseurs supportés à base d'au moins un sel de cobalt et/ou de nickel d'au moins un hétéropolyanion d'Anderson combinant dans sa structure du molybdène et du cobalt ou du molybdène et du nickel.

Ladite matrice composant le support peut également renfermer, en plus d'au moins un des composés cités ci-dessus, au moins une argile simple synthétique ou naturelle de type phyllosilicate 2:1 dioctaédrique ou phyllosilicate 3:1 trioctaédrique telles que la kaolinite, l'antigorite, la chrysotile, la montmorillonnite, la beidellite, la vermiculite, le talc, l'hectorite, la saponite, la laponite. Ces argiles peuvent être éventuellement délaminées. De manière préférée, on choisit comme support une matrice formée d'un mélange d'alumine et d'argile ou d'un mélange formée de silice-alumine et d'argile.

Ladite matrice peut également renfermer, en plus d'au moins un des composés cités ci-dessus, au moins un composé choisi dans le groupe formé par la famille des tamis moléculaires de type aluminosilicate cristallisé, zéolithes synthétiques et naturelles telles que la zéolithe Y, la zéolithe Y fluorée, la zéolithe Y contenant des terres rares, la zéolithe X, la zéolithe L, la zéolithe bêta, la mordénite à petits pores, la mordénite à grands pores, les zéolithes oméga, NU-10, ZSM-22, NU-86, NU-87, NU-88, et la zéolite ZSM-5. Parmi les zéolithes on préfère habituellement employer des zéolithes dont le rapport atome de charpente silicium/aluminium (Si/Al) est supérieur à environ 3: 1. On emploie avantageusement

6

des zéolithes de structure faujasite et en particulier les zéolithes Y stabilisées et ultrastabilisées (USY) soit sous forme au moins partiellement échangée avec des cations métalliques, par exemple des cations des métaux alcalino-terreux et/ou des cations de métaux de terres rares de numéro atomique 57 à 71 inclus, soit sous forme hydrogène (Zéolite Molecular Sieves Structure, Chemistry and Uses, D.W. BRECK, J.WILLEY and sons 1973).

Les supports acides peuvent être choisis également dans le groupe formé par la famille des tamis moléculaires cristallisés non zéolithiques tels que les silices mésoporeuses, la silicalite, les silicoaluminophosphates, les aluminophosphates, les ferrosilicates, les silicoaluminates de titane, les borosilicates, les chromosilicates et les aluminophosphates de métaux de transition (dont le cobalt).

Les catalyseurs supportés préparés à partir d'au moins un sel de cobalt et/ou de nickel d'au moins un hétéropolyanion d'Anderson renferment généralement, à l'état séché, en % poids par rapport à la masse totale du catalyseur :

- 1 à 99,9 %, de préférence 5 à 99,5 % et de manière encore plus préférée 10 à 99% d'au moins une matrice minérale poreuse,
- 0,1 à 99 %, de préférence 0,5 à 95 % et de manière encore plus préférée 1 à 90% d'au moins un sel de cobalt et/ou de nickel d'au moins un hétéropolyanion d'Anderson combinant dans sa structure du molybdène et du cobalt ou du molybdène et du nickel,
- 0 à 80%, de préférence 3 à 70% et de manière encore plus préférée 5 à 60 % d'au moins un tamis moléculaire zéolithique, par exemple une zéolithe Y de structure faujasite, généralement sous forme hydrogène.

Le ou les sel(s) de cobalt et/ou de nickel d'au moins un hétéropolyanion combinant dans sa structure du molybdène et du cobalt ou du molybdène et du nickel présent(s) dans le catalyseur supporté à l'état séché est (sont) préférentiellement choisi(s) parmi les sels $Co^{II}_{3/2}[Co^{III}Mo_6O_{24}H_6]$, $Ni^{II}_{3/2}[Co^{III}Mo_6O_{24}H_6]$, $Co^{II}_3[Co^{III}_2Mo_{10}O_{38}H_4]$, $Ni^{II}_3[Co^{III}_2Mo_{10}O_{38}H_4]$, $Ni^{II}_2[Ni^{II}Mo_6O_{24}H_6]$, $Ni^{II}_4[Ni^{II}_2Mo_{10}O_{38}H_4]$,

La préparation d'un catalyseur massique, préférentiellement d'un catalyseur d'hydrotraitement massique, à partir d'au moins un sel de cobalt et/ou de nickel d'au moins un hétéropolyanion combinant dans sa structure du molybdène et du cobalt ou du molybdène et du nickel peut être réalisée par toute méthode conventionnelle connue de l'Homme du métier. De façon générale et de manière avantageuse, on procède à un mélange mécanique d'au moins dudit sel obtenu après évaporation de la solution préparée selon le procédé conforme à la présente invention avec une matrice servant de liant, et enfin, après une mise en forme, de procéder à un séchage suivi éventuellement d'une étape de calcination dudit mélange mécanique. La mise en forme peut être faite par toute méthode bien connue de l'homme du métier et décrite aux pages 122 à 132 dans l'ouvrage "Catalyse de contact, conception, préparation et mise en oeuvre des catalyseurs industriels" publié par J.F. Le Page aux éditions Technip en 1978 comme par exemple le pastillage, le comalaxage suivi d'une extrusion, voire par la technique dite de coagulation en goutte. De manière préférée, la mise en forme est faite sous forme d'extrudés de diamètre compris entre 0,5 et 3,5 mm et, de manière encore plus préférée, compris entre 0,8 et 2,5 mm.

Un catalyseur massique préparé à partir d'au moins un sel de cobalt et/ou de nickel d'au moins un hétéropolyanion d'Anderson renferme généralement, à l'état séché, en % poids par rapport à la masse totale du catalyseur, de 0,01 à 100 %, de préférence de 0,05 à 100% et de manière encore plus préférée de 0,1 à 100 % d'au moins un desdits sels. Le ou les sel(s) de cobalt et/ou de nickel d'au moins un hétéropolyanion d'Anderson combinant dans sa structure du molybdène et du cobalt ou du molybdène et du nickel présent(s) dans le catalyseur massique, à l'état séché, est (sont) préférentiellement choisi(s) parmi les sels $Co^{II}_{3/2}[Co^{III}Mo_6O_{24}H_6]$, $Ni^{II}_{3/2}[Co^{III}Mo_6O_{24}H_6]$, $Co^{II}_3[Co^{III}_2Mo_{10}O_{38}H_4]$, $Ni^{III}_3[Co^{III}_2Mo_{10}O_{38}H_4]$, $Ni^{II}_2[Ni^{II}Mo_6O_{24}H_6]$ et $Ni^{II}_4[Ni^{II}_2Mo_{10}O_{38}H_4]$,

Selon l'invention, dans la structure des hétéropolyanions d'Anderson combinant au moins du molybdène et au moins du cobalt ou au moins du molybdène et au moins du nickel, le nombre de liaisons reliant le cobalt au molybdène ou reliant le nickel au molybdène et présentant une longueur inférieure ou égale à 3,6 angströms est strictement supérieur à 2, c'est-à-dire que plus de 2 atomes de molybdène entourent les atomes de cobalt ou de nickel à une distance inférieure ou égale à 3,6 angströms. Ce type de caractéristiques est facilement mis en évidence par la technique de caractérisation de spectroscopie d'absorption des rayons X. Le nombre élevé d'atomes voisins molybdène se trouvant à proximité immédiate du cobalt ou du nickel traduit une forte interaction, dans les catalyseurs préparés à partir d'au moins un sel de cobalt et/ou de nickel d'au moins un hétéropolyanion d'Anderson combinant dans sa structure du molybdène et du cobalt ou du molybdène et du nickel selon l'invention, entre le molybdène et le cobalt ou le molybdène et le nickel.

De manière préférée, plus de 2 liaisons reliant le nickel ou le cobalt au molybdène présentent une longueur inférieure ou égale à 3,5 angströms dans le catalyseur à l'état séché, préparé à partir d'au moins un sel de cobalt et/ou de nickel d'au moins un hétéropolyanion d'Anderson combinant dans sa structure du molybdène et du cobalt ou du molybdène et du nickel selon l'invention.

Selon l'invention, les catalyseurs préparés à partir d'au moins un sel de cobalt et/ou de nickel d'au moins un hétéropolyanion d'Anderson selon l'invention, peuvent être des catalyseurs à l'état séché contenant au moins un sel de cobalt et/ou de nickel d'au moins un hétéropolyanion combinant dans sa structure du molybdène et du cobalt ou du molybdène et du nickel ou des catalyseurs à l'état calciné obtenus par calcination de catalyseurs séchés. Selon l'invention, un catalyseur calciné contient au moins du cobalt et au moins du molybdène ou au moins du nickel et au moins du molybdène, dans lequel le cobalt ou le nickel est en forte interaction avec le molybdène et est préparé à partir d'au moins un sel de cobalt et/ou de nickel d'au moins un hétéropolyanion combinant dans sa structure au moins du molybdène et au moins du cobalt ou au moins du molybdène et au moins du nickel, dans laquelle le nombre de liaison reliant le nickel ou le cobalt au molybdène et présentant une longueur inférieure ou égale à 3,6 angströms, de préférence inférieure ou égale à 3,5 angströms est strictement supérieur à 2. Les catalyseurs contiennent avantageusement de 7 à 23% poids d'oxyde de molybdène $MoO_3$.

Les catalyseurs préparés à partir d'au moins un sel de cobalt et/ou de nickel d'au moins un hétéropolyanion d'Anderson selon l'invention, et se présentant soit à l'état séché soit à l'état calciné, sont de préférence soumis à un traitement de sulfuration de manière à obtenir des catalyseurs de type sulfures, le traitement de sulfuration permettant de transformer, au moins en partie, les espèces métalliques en sulfures avant leur mise en contact avec la charge à traiter. Ce traitement d'activation par sulfuration est bien connu de l'homme du métier et peut être effectué par toute méthode déjà décrite dans la littérature. La source de soufre peut être le soufre élémentaire, le sulfure de carbone, l'hydrogène sulfuré, les hydrocarbures soufrés tels que le diméthylsulfure, le diméthyldisulfure, les mercaptans, les composés du thiophène, les thiols, les polysulfures tels que par exemple le ditertiononylpolysulfure ou TPS de la société ARKEMA, les coupes pétrolières riches en soufre telles que l'essence, le kérosène, le gazole, seuls ou en mélanges avec un des composés soufrés cités ci-dessus. La source de soufre préférée est l'hydrogène sulfuré ou les hydrocarbures soufrés tels que le diméthyldisulfure. Une méthode de sulfuration classique bien connue de l'homme du métier consiste à chauffer le catalyseur, placé en présence d'hydrogène sulfuré (pur ou par exemple sous flux d'un mélange hydrogène/hydrogène sulfuré), à une température comprise entre 150 et 800°C, de préférence entre 250 et 600°C, généralement dans une zone réactionnelle à lit traversé.

Les catalyseurs préparés à partir d'au moins un sel de cobalt et/ou de nickel d'au moins un hétéropolyanion d'Anderson selon l'invention, et se présentant soit à l'état séché soit à l'état calciné, sont utilisés pour l'hydroraffinage et/ou l'hydroconversion de charges hydrocarbonées telles que les coupes pétrolières, les coupes issues du charbon ou les hydrocarbures produits à partir du gaz naturel et sont plus particulièrement utilisés pour l'hydrogénation, l'hydrodéazotation, l'hydrodéoxygénation, l'hydrodéaromatisation, l'hydrodésulfuration, l'hydrodémétallisation, l'hydroisomérisation, l'hydrodéalkylation, la déshydrogénation. Les catalyseurs préparés à partir d'au moins un sel de cobalt et/ou de nickel d'au moins un hétéropolyanion d'Anderson selon la présente invention sont également avantageusement utilisés pour l'hydrocraquage de charges hydrocarbonées telles que par exemple des charges contenant des composés aromatiques et/ou oléfiniques, et/ou naphténiques, et/ou paraffiniques, lesdites charges contenant éventuellement des métaux, et/ou de l'azote, et/ou de l'oxygène et /ou du soufre.

Les charges employées dans les divers procédés utilisant les catalyseurs préparés à partir d'au moins un sel de cobalt et/ou de nickel d'au moins un hétéropolyanion d'Anderson selon l'invention sont généralement choisies dans le groupe formé par les essences, les gazoles, les gazoles sous vide, les résidus désasphaltés ou non, les huiles paraffiniques, les cires et paraffines. Elles contiennent au moins un hétéroatome tels que soufre, oxygène, azote et éventuellement des métaux tels que nickel et vanadium. Les conditions opératoires de l'hydroraffinage ou de l'hydroconversion telles que température, pression, rapport volumique litre d'hydrogène/litre d'hydrocarbure, vitesse volumique horaire, peuvent être très variables en fonction de la nature de la charge, de la qualité des produits désirés et des installations dont dispose le raffineur. Les conditions opératoires utilisées dans le ou les réacteur(s) des divers procédés utilisant un catalyseur préparé à partir d'au moins un sel de cobalt et/ou de nickel d'au moins un hétéropolyanion d'Anderson selon l'invention sont préférentiellement : une température supérieure à 200°C, de préférence comprise entre 200 et 450°C, sous une pression comprise entre 0,5 et 30 MPa, de préférence inférieure à 20 MPa, la vitesse spatiale étant comprise entre 0,1 et 10 $h^{-1}$, de préférence comprise entre 0,1 et 8 $h^{-1}$, et de manière très préférée entre 0,2 et 6 $h^{-1}$, et la quantité d'hydrogène introduite est telle que le rapport volumique litre d'hydrogène/litre d'hydrocarbure soit compris entre 10 et 5000 1/1, de préférence entre 100 et 2000 1/1.

**Exemples** :

Les exemples qui suivent précisent l'invention sans toutefois en limiter la portée. Pour tous les exemples de préparation de catalyseurs de la présente invention, une alumine gamma présentant une surface spécifique de 250 $m^2/g$, et commercialisée par la société AXENS sous forme d'extrudés, a été utilisée comme support de base.

Exemple 1 : Préparation à l'état oxyde de catalyseurs d'hydrotraitement A, A' de type CoMo ainsi que E et E' de type NiMo, non conformes à l'invention

90 g d'extrudés trilobes d'alumine gamma (Axens, 250 $m^2/g$) sont imprégnés à sec par une solution contenant les précurseurs de molybdène et de cobalt. L'imprégnation à sec est une technique bien connue de l'homme de l'art, au cours de laquelle le volume poreux du support est rempli par une solution de volume équivalent contenant les précurseurs de la phase active. La solution utilisée ici a un volume de 75 ml, et elle contient 10,6 g d'heptamolybdate d'ammonium (HMA) de formule $(NH_4)_6Mo_7O_{24}$, 4 $H_2O$ (concentration 96% poids), 7,2 g de nitrate de cobalt $Co(NO_3)_2$, 6 $H_2O$. Après imprégnation, les extrudés sont laissés à maturer 24 h à température ambiante dans une atmosphère saturée en eau. Les extrudés sont ensuite séchés à 120°C pendant deux heures en étuve. Enfin, les extrudés sont calcinés en présence d'un débit d'air de 1,5 l/g catalyseur/h avec une rampe de montée en température de 5°C/min et un palier à 500°C de 2 h. Le catalyseur A ainsi obtenu à l'état oxyde, de formulation CoMo a une teneur en molybdène de 8,30 exprimé en % poids d'oxyde $MoO_3$, et une teneur en cobalt de 1,85 exprimé en % poids d'oxyde CoO. Le ratio atomique Co/Mo de ce catalyseur est de 0,41. Ce catalyseur est non conforme à l'invention. La préparation du catalyseur A' est en tout point identique à celle du catalyseur A jusqu'à l'étape de séchage. A l'issue de l'étape de séchage, une deuxième imprégnation à sec est faite sur le catalyseur séché. Une solution de 45 ml, contenant 10,2 g d'HMA et 8,8 g de $Co(NO_3)_2$, 6 $H_2O$ est utilisée au cours de cette seconde imprégnation. Les étapes de séchage et calcination sont ensuite identiques à celles du catalyseur A. Le catalyseur A' ainsi obtenu à l'état oxyde, de formulation CoMo a une teneur en molybdène de 16,30 exprimé en % poids d'oxyde $MoO_3$, et une teneur en cobalt de 4,10 exprimé en % poids d'oxyde CoO. Le ratio atomique Co/Mo obtenu sur ce catalyseur est de 0,48. Ce catalyseur est non conforme à l'invention.

Le catalyseur E est préparé en remplaçant le nitrate de cobalt par du nitrate de nickel $Ni(NO_3)_2$, 6 $H_2O$. 88 g d'extrudés d'alumine sont imprégnés à sec par une solution aqueuse de 74 ml contenant 11,74 g d'HMA et 9,34 g de nitrate de nickel. Les étapes de maturation, séchage et calcination sont identiques à celles subies par le catalyseur A. Le catalyseur E ainsi obtenu à l'état oxyde, de formulation NiMo a une teneur en molybdène de 9,20 exprimé en % poids d'oxyde $MoO_3$, et une teneur en nickel de 2,40 exprimé en % poids d'oxyde NiO. Le ratio atomique Ni/Mo de ce catalyseur est de 0,50. Ce catalyseur est non conforme à l'invention.

De la même manière que pour le catalyseur A', le catalyseur E' est obtenu en deux imprégnations à sec avec une étape de séchage intermédiaire, en utilisant l'heptamolybdate d'ammonium (14,16 g) et le nitrate de nickel (8,17 g) dissous dans 43 ml de solution aqueuse. Les étapes de séchage et calcination sont ensuite identiques à celles du catalyseur A. Le catalyseur E' ainsi obtenu à l'état oxyde, de formulation NiMo a une teneur en molybdène de 20,30 exprimé en % poids d'oxyde $MoO_3$, et une teneur en nickel de 4,50 exprimé en % poids d'oxyde NiO. Le ratio atomique Ni/Mo obtenu sur ce catalyseur est de 0,48. Ce catalyseur est non conforme à l'invention.

Le Tableau 1 résume les formulations des quatre catalyseurs A, A', E, E' non conformes à l'invention.

Tableau 1 : Formulation des catalyseurs préparés à partir d'heptamolybdate d'ammonium et de nitrate de nickel ou de cobalt (non conformes à l'invention)

| Catalyseur | Promoteur X | $MoO_3$ (% poids) | XO (% poids) | Ratio molaire X/Mo |
|---|---|---|---|---|
| A | Co | 8,30 | 1,85 | 0,41 |
| A' | Co | 16,30 | 4,10 | 0,48 |
| E | Ni | 9,20 | 2,40 | 0,50 |
| E' | Ni | 20,30 | 4,50 | 0,48 |

Exemple 2 : Préparation d'un catalyseur d'hydrotraitement B de type CoMo à l'état oxyde via l'utilisation d'une solution d'imprégnation contenant l'hétéropolyanion $CoMo_6O_{24}H_6^{3-}$ et du catalyseur d'hydrotraitement B' à partir d'une solution contenant la forme dimère $Co_2Mo_{10}O_{38}H_4^{6-}$ de l'hétéropolyanion $CoMo_6O_{24}H_6^{3-}$, non conformes à l'invention.

90 g d'extrudés d'alumine y sont introduits dans un drageoire et imprégnés à sec avec une solution contenant le sel $CoMo_6O_{24}H_6.(Co)_{3/2}$ (encore dénommé $CoMo_6(Co)$). Cette solution est obtenue selon le protocole décrit dans l'exemple 2 de la demande de brevet EP-A1-1.393.802 comprenant notamment une étape de cristallisation du sel d'ammonium puis d'échange ionique pour échanger les contre-ions ammonium de l'hétéropolyanion en cobalt. Cette dernière étape permet d'atteindre le ratio molaire Co/Mo de 0,41. A l'issue de l'étape d'imprégnation, les extrudés sont laissés à maturer 24 h à température ambiante dans une atmosphère saturée en eau. A l'issue de la maturation, les extrudés sont séchés à 120°C une nuit puis calcinés à 450°C pendant 2 h sous oxygène (rampe de montée en température de 5°C/min). Le catalyseur B obtenu a une teneur en molybdène exprimée en % poids de $MoO_3$ de 9,90. Sa teneur en cobalt exprimée en % poids en CoO est de 2,15. Le ratio molaire Co/Mo est de 0,41. Ce catalyseur est non conforme à l'invention.

90 g d'alumine y sous forme d'extrudés sont introduits dans un drageoire et imprégnés à sec avec une solution contenant le sel $Co_2Mo_{10}O_{38}H_4.(Co)_3$ (encore dénommé $Co_2Mo_{10}(Co)$). Cette solution peut être obtenue selon le protocole décrit dans l'exemple 4 de le demande de brevet EP-A1-1.393.802. L'étape d'échange ionique entre les cations $NH_4^+$ et $Co^{2+}$ permet d'atteindre un ratio atomique Co/Mo de 0,50. Les extrudés sont laissés à maturer 24 h sous atmosphère saturée d'eau, à température ambiante, puis séchés sous air, 12 heures, à l'étuve à 120°C puis calcinés sous air sec à 450°C pendant 2 h (rampe de température de 5°C/min, débit d'air sec de 1,5 l/g de solide/h), conduisant au catalyseur B'. La formulation du catalyseur B' obtenu est la suivante : 16,3 % poids en $MoO_3$ et 4,1 % poids en CoO. Le ratio molaire Co/Mo de ce catalyseur est de 0,50. Ce catalyseur n'est pas conforme à l'invention.

Le tableau 2 résume les formulations des deux catalyseurs B et B' non conformes à l'invention.

Tableau 2 : Formulation des catalyseurs CoMo préparés à partir de solution contenant le sel $CoMo_6O24H_6.(Co)_{3/2}$ ou le sel $Co_2Mo_{10}O_{38}H_4.(Co)_3$ (non conformes à l'invention)

| Catalyseur | Promoteur X | $MoO_3$ (% poids) | XO (% poids) | Ratio molaire X/Mo |
|---|---|---|---|---|
| B | Co | 9,90 | 2,15 | 0,41 |
| B' | Co | 16,30 | 4,10 | 0,50 |

Exemple 3 : Préparation de catalyseurs d'hydrotraitement C', D et D' de type CoMo à l'état oxyde en utilisant une solution contenant le sel $CoMo_6(Co)$ et sa forme dimère $Co_2Mo_{10}(Co)$, conformes à l'invention :

74,3 g d'extrudés trilobes d'alumine sont imprégnés à sec de 77 ml d'une solution aqueuse préparée selon l'invention. La préparation de cette solution est la suivante :

a) 77 g d'eau oxygénée (pureté 30%) sont introduits dans un ballon, puis 21,2 g de $MoO_3$ (pureté 96 %) sont introduits ; le ratio molaire $H_2O_2$/Mo est alors de 6 ;
b) la dissolution du trioxyde de molybdène est obtenue en 1h30 grâce à un chauffage à reflux à 80°C. La solution obtenue est limpide, il est ensuite nécessaire de réduire le volume de solution à 62 ml par chauffage. Une fois sa température revenue à température ambiante, le pH est mesuré et la valeur obtenue est égale à 0,05 ;
c) Le carbonate de cobalt (8,6 g , pureté 99 %) est alors introduit précautionneusement par petites quantités pour éviter toute exothermie et toute effervescence non contrôlée ; la dissolution du carbonate est immédiate ; la solution obtenue a un pH de 3,6.

Le spectre Raman de la solution préparée présente les bandes caractéristiques des sels $Co_2Mo_{10}(Co)$ en solution à 957, 917, 602, 565, 355, 222 cm$^{-1}$ et $CoMo_6(Co)$ en solution à 952, 903, 575, 355, 222 cm$^{-1}$.
La solution préparée est utilisée pour imprégnation sur un support alumine gamma mis en forme sous forme d'extrudés (Axens, 250 m$^2$/g). Les extrudés sont ensuite laissés à maturer 24 h sous atmosphère saturée d'eau, à température ambiante, puis séchés sous air, 12 h, à l'étuve à 120°C. Le catalyseur séché ainsi obtenu est le catalyseur C'. La moitié du catalyseur C' est ensuite calcinée sous air sec à 450°C pendant 2 h (rampe de température de 5°C/min, débit d'air sec de 1,5 l/g de solide/h), conduisant au catalyseur D'. La formulation du catalyseur D' obtenu est la suivante : 20,4 % poids en $MoO_3$ et 5,3 % poids en CoO. Les teneurs en molybdène et en cobalt dans le catalyseur C' sont identiques à celles du catalyseur D'. Le ratio molaire Co/Mo dans les catalyseurs C' et D' est égal à 0,49. Ces catalyseurs C' et D' sont conformes à l'invention. Les valeurs données dans le tableau 3 pour le catalyseur C' sont celles obtenues après correction de la perte au feu.

87,4 g d'extrudés trilobes d'alumine sont imprégnés à sec de 74 ml d'une solution aqueuse préparée selon l'invention. La préparation de cette solution est la suivante :

a) 38,0 g d'eau oxygénée (pureté 30%) sont introduits dans un ballon avec 36 g d'eau distillée, puis 10,4 g de $MoO_3$ (pureté 96 %) sont introduits ; le ratio molaire $H_2O_2$/Mo est alors de 6 ;
b) la dissolution du trioxyde de molybdène est obtenue sous agitation en une dizaine d'heures à température ambiante. La solution obtenue présente un pH égal à 0,07 ;
c) Le carbonate de cobalt (4,2 g , pureté 99 %) est alors introduit précautionneusement par petites quantités pour éviter toute exothermie et toute effervescence non contrôlée ; la dissolution du carbonate est immédiate ; la solution obtenue a un pH de 3,8.

Le spectre Raman de la solution préparée présente bien les bandes caractéristiques des sels en solution $Co_2Mo_{10}(Co)$ à 957, 917, 602, 565, 355, 222 cm$^{-1}$ et $CoMo_6(Co)$ à 952, 903, 575, 355, 222 cm$^{-1}$.
La solution préparée est utilisée pour imprégnation sur un support alumine gamma mis en forme sous forme d'extrudés (Axens, 250 m$^2$/g). Les extrudés sont ensuite laissés à maturer 24 h sous atmosphère saturée d'eau, à température ambiante, puis séchés sous air, 12 h, à l'étuve à 120°C. Les extrudés sont enfin calcinés sous air sec à 450°C pendant 2 h (rampe de température de 5°C/min, débit d'air sec de 1,5 l/g de solide/h). La formulation du catalyseur D obtenu est la suivante : 10,0 % poids en $MoO_3$ et 2,6 % poids en CoO. Le ratio molaire Co/Mo est de 0,49. Le catalyseur D est conforme à l'invention.

Les formulations des trois catalyseurs obtenus sont résumés dans le tableau 3.

Tableau 3 : Formulation des catalyseurs CoMo conformes à l'invention préparés à partir de solution contenant le sel $CoMo_6O_{24}H_6.(Co)_{3/2}$ et le sel $Co_2Mo_{10}O_{38}H_4.(Co)_3$

| Catalyseur | Promoteur X | $MoO_3$ (% poids) | XO (% poids) | Ratio molaire X/Mo |
|---|---|---|---|---|
| C' (séché) | Co | 20,4 | 5,3 | 0,49 |
| D' (calciné) | Co | 20,4 | 5,3 | 0,49 |
| D | Co | 10,0 | 2,6 | 0,49 |

Exemple 4 : Essai comparatif des catalyseurs A, A', B, B', C' et D' en hydrogénation du toluène dans le cyclohexane sous pression en présence d'hydrogène sulfuré

Les catalyseurs A, A', B, B', C' et D', précédemment décrits, sont sulfurés in situ en dynamique dans un réacteur tubulaire à lit fixe traversé, les fluides circulant de haut en bas. Les mesures d'activité hydrogénante sont effectuées immédiatement après la sulfuration sous pression sans remise à l'air avec la charge d'hydrocarbures qui a servi à sulfurer les catalyseurs.

La charge de sulfuration et de test est composée de 5,8 % de diméthyldisulfure (DMDS), 20 % de toluène et 74,2 % de cyclohexane (en poids). On mesure ainsi les activités catalytiques stabilisées de volumes égaux (40 $cm^3$) de catalyseurs A, A', B, B', C', et D' dans la réaction d'hydrogénation du toluène.

Les conditions de mesure d'activité sont les suivantes :

| | |
|---|---|
| Pression totale : | 6,0 MPa |
| Pression de toluène : | 0,38 MPa |
| Pression de cyclohexane : | 1,55 MPa |
| Pression d'hydrogène : | 3,64 MPa |
| Pression d'$H_2S$ : | 0,22 MPa |
| Volume de catalyseur : | 40 $cm^3$ |
| Débit de charge : | 80 $cm^3$/h |
| Vitesse spatiale horaire : | 2 l/l/h$^{-1}$ |
| Débit d'hydrogène : | 36 l/h |
| Température de sulfuration et de test : | 350 °C (rampe de 3 °C/min) |

Des prélèvements de l'effluent liquide sont analysés par chromatographie en phase gazeuse. La détermination des concentrations molaires en toluène non-converti (T) et des concentrations des produits d'hydrogénation (le méthylcyclohexane (MCC6), l'éthyl-cyclopentane (EtCC5) et les diméthylcyclopentanes (DMCC5)) permettent de calculer un taux d'hydrogénation de toluène XHYD défini par :

$$X_{HYD} (\%) = 100 * \frac{(MCCC6 + EtCC5 + DMCC5)}{(T + MCC6 + EtCC5 + DMCC5)}$$

La réaction d'hydrogénation du toluène étant d'ordre 1 dans les conditions de test mises en oeuvre et le réacteur se comportant comme un réacteur piston idéal, on calcule l'activité hydrogénante AHYD des catalyseurs en appliquant la formule :

$$AHYD = \ln(100/(100-XHYD))$$

Le Tableau 4 compare les activités hydrogénantes relatives, égales au rapport de l'activité du catalyseur considéré sur l'activité du catalyseur A pris comme référence (activité 100 %).

Tableau 4 : Activités relatives comparées en hydrogénation du toluène des catalyseurs A, A', B, B' (non conformes à l'invention) et C', D' (conformes à l'invention)

| Catalyseur | Précurseurs présents dans la solution d'imprégnation | Teneur en $MoO_3$ des catalyseurs (% poids) | AHYD à iso-volume de catalyseur relativement à A |
|---|---|---|---|
| A non conforme | HMA, $Co(NO_3)_2$ | 8,30 | 100 |
| A' non conforme | HMA, $Co(NO_3)_2$ | 16,30 | 196 |
| B non conforme | $CoMo_6(Co)$ | 9,90 | 131 |
| B' non conforme | $Co_2Mo_{10}(Co)$ | 16,30 | 223 |
| C' conforme | $Co_2Mo_{10}(Co)$ et $CoMo_6(Co)$ | 20,40 | 230 |
| D' conforme | $Co_2Mo_{10}(Co)$ et $CoMo_6(Co)$ | 20,40 | 283 |

Le tableau 4 montre le gain important d'activité hydrogénante relative à iso-volume obtenu sur les catalyseurs préparés selon le procédé de l'invention par rapport aux catalyseurs préparés selon un procédé non conforme à l'invention.

Exemple 5 : Essai comparatif des catalyseurs A', B', C' et D' en hydrodésulfuration de gazole de distillation directe

Les catalyseurs A', B', C', et D' précédemment décrits ont également été comparés en test d'hydrodésulfuration d'un gazole dont les principales caractéristiques sont données ci-après:

| | |
|---|---|
| Densité à 15 °C : | 0,8522 |
| Soufre : | 1,44 % en poids |
| Distillation Simulée : | |
| PI : | 155 °C |
| 10 % poids : | 247 °C |
| 50 % poids : | 315 °C |
| 90 % poids : | 392 °C |
| PF : | 444 °C |

Le test est mené dans un réacteur pilote isotherme à lit fixe traversé, les fluides circulant de bas en haut. Après sulfuration in situ à 350 °C dans l'unité sous pression au moyen du gazole du test auquel est additionné 2 % en poids de diméthyldisulfure, le test d'hydrodésulfuration a été conduit dans les conditions opératoires suivantes :

| | |
|---|---|
| Pression totale : | 7 MPa |
| Volume de catalyseur : | 30 $cm^3$ |
| Température : | 340 °C |
| Débit d'hydrogène : | 24 l/h |
| Débit de charge : | 60 $cm^3$/h |

Les performances catalytiques des catalyseurs testés sont données dans le tableau 5. Elles sont exprimées en activité relative, en posant que celle du catalyseur A' est égale à 100 et en considérant qu'elles sont d'ordre apparent 1,5 par rapport au soufre. La relation liant l'activité et la conversion en hydrodésulfuration (%HDS) est la suivante :

$$AHDS = \sqrt{\frac{100}{(100 - \%HDS)}} - 1$$

Tableau 5 : Activités relatives en hydrodésulfuration de gazole de distillation directe des catalyseurs B' (non conforme à l'invention), C' , D' (conformes à l'invention) comparées à celles du catalyseur A' (non conforme à l'invention)

| Catalyseur | AHDS relativement à A' |
|---|---|
| A' | 100 |
| B' | 135 |
| C' | 138 |
| D' | 147 |

D'une façon surprenante, le tableau 5 montre le gain d'activité important obtenu sur les catalyseurs C' et D' préparés selon le procédé de l'invention par rapport aux catalyseurs A' et B' non conformes à l'invention. Les performances obtenues par le catalyseur B' (comparatif) et les catalyseurs C' et D' (conformes) montrent que les catalyseurs préparés à partir de sels d'hétéroplyanions d'Anderson combinant dans la structure au moins du molybdène et du nickel ou au moins du molybdène et du cobalt et conformément au procédé de l'invention sont plus performants catalytiquement qu'un catalyseur également préparé à partir de sels d'hétéroplyanions d'Anderson combinant dans la structure au moins du molybdène et du nickel ou au moins du molybdène et du cobalt mais dont la méthode de préparation est plus complexe, réalisée en deux étapes dont un échage ionique.

Exemple 6 : Préparation d'un catalyseur d'hydrotraitement F' de type NiMo à l'état oxyde en utilisant une solution contenant le sel $NiMo_6(Ni)$ et/ou sa forme dimère $Ni_2Mo_{10}(Ni)$, conforme à l'invention :
73.5 g d'extrudés trilobés d'alumine sont imprégnés à sec de 62 ml d'une solution aqueuse préparée selon l'invention. La préparation de cette solution est la suivante :

a) 92.3 g d'eau oxygénée (pureté 30%) sont introduits dans un ballon, puis 19.5 g de $MoO_3$ (pureté 96 %) sont introduits ; le ratio molaire $H_2O_2/Mo$ est alors de 6. La solution est étendue à 103 ml au moyen d'eau permutée.
b) la dissolution du trioxyde de molybdène est obtenue en 1h30 grâce à un chauffage à reflux à 80°C. La solution est ensuite réduite à 80°C à un volume de 62 ml. Le pH est alors de 0,04.
c) L'hydroxycarbonate de nickel (13,1 g, pureté 94 %) est alors introduit précautionneusement par petites quantités pour éviter toute exothermie et toute effervescence non contrôlée ; la dissolution de l'hydroxycarbonate de nickel est immédiate et le pH est ajusté par ajout d'acide. Le spectre Raman de la solution préparée présente les bandes caractéristiques du sel de nickel en solution de l'hétéropolyanion $Ni_2Mo_{10}O_{38}H_4^{8-}$ à 955, 906, 560 et 360 $cm^{-1}$.

La solution préparée est utilisée pour imprégnation sur un support alumine gamma mis en forme sous forme d'extrudés (Axens, 250 $m^2$/g). Les extrudés sont ensuite laissés à maturer 24 h sous atmosphère saturée d'eau, à température ambiante, puis séchés sous air, 12 h, à l'étuve à 120°C. Le catalyseur séché ainsi obtenu est ensuite calciné sous air sec à 450°C pendant 2 h (rampe de température de 5°C/min, débit d'air sec de 1,5 l/g de solide/h), conduisant au catalyseur F'. La formulation du catalyseur F' obtenu est la suivante : 20,0 % poids en $MoO_3$ et 6,3 % poids en NiO. Le ratio molaire Ni/Mo est égal à 0,6. Ce catalyseur F' est conforme à l'invention.

Exemple 7 : Essai comparatif des catalyseurs E' (non conforme), et F' (conforme) en hydrotraitement de distillats sous vide

Les catalyseurs NiMo E' et F' précédemment décrits ont également été comparés en test d'hydrotraitement d'un distillat sous vide dont les principales caractéristiques sont données ci-après :

| | |
|---|---|
| Densité à 20 °C : | 0,9365 |
| Soufre : | 2,92 % en poids |
| Azote total : | 1400 ppm poids |
| Distillation Simulée : | |
| PI : | 361 °C |
| 10 % poids : | 430 °C |
| 50 % poids : | 492 °C |
| 90 % poids : | 567 °C |
| PF : | 598 °C |

Le test est mené dans un réacteur pilote isotherme à lit fixe traversé, les fluides circulant de bas en haut. Après sulfuration in situ à 350 °C dans l'unité sous pression au moyen d'un gazole de distillation directe auquel est additionné 2 % en poids de diméthyldisulfure, le test d'hydrotraitement a été conduit dans les conditions opératoires suivantes :

| | |
|---|---|
| Pression totale : | 12 MPa |
| Volume de catalyseur : | 40 cm$^3$ |
| Température : | 380 °C |
| Débit d'hydrogène : | 40 l/h |
| Débit de charge : | 40 cm$^3$/h |

Les performances catalytiques des catalyseurs testés sont données dans le tableau 6. Elles sont exprimées en activité relative, en posant que celle du catalyseur E' est égale à 100 et en considérant qu'elles sont d'ordre 1,5 par rapport au soufre total. La relation liant l'activité et la conversion en hydrodésulfuration (%HDS) est la suivante :

$$AHDS = \sqrt{\frac{100}{(100 - \%HDS)}} - 1$$

La même relation est applicable pour l'hydrodéazotation (% HDN et AHDN) avec un ordre de 1 par rapport à l'azote total.

Par ailleurs, on évalue également la conversion brute en fraction ayant un point d'ébullition inférieur à 380 °C obtenue avec chaque catalyseur. Elle est exprimée à partir des résultats de distillation simulée (méthode ASTM D86) par la relation :

$$\text{Conversion} = [(\% 380+)_{\text{charge}} - (\%380\text{-})_{\text{effluent}}]/(\%380+)_{\text{charge}}$$

où - (% 380+)$_{\text{charge}}$ représente le pourcentage en poids de la charge ayant une température d'ébullition supérieure à 380°C.

- (%380-)$_{\text{effluent}}$) représente le pourcentage en poids de l'effluent ayant une température d'ébullition inférieure à 380°C.

Tableau 6 : Activités relatives en hydrodésulfuration de gazole de distillation directe du catalyseur F' (conforme à l'invention) comparée à celle du catalyseur E' (non conforme à l'invention)

| Catalyseur | Formulation (% poids NiO / MoO$_3$) | AHDS relative à E' | AHDN relative à E' | Conversion (%) |
|---|---|---|---|---|
| E' (non conforme) | 4,5 / 20,3 | 100 | 100 | 25 |
| F' (conforme) | 6,3 / 20,0 | 115 | 120 | 27 |

D'une façon surprenante, le tableau 6 montre les gains d'activité obtenu sur le catalyseur F' préparé selon l'invention par rapport au catalyseur E' préparé selon un procédé non conforme à l'invention.

Exemple 8 : Essai comparatif des catalyseurs D, B et A' en hydrodésulfuration de résidu sous vide

L'activité catalytique du catalyseur D conforme à l'invention a été étudiée en HDS d'un résidu sous vide préalablement démétallisé et sa performance a été comparée à celle du catalyseur A' non conforme. La charge utilisée est un résidu de distillation sous vide d'origine Arabe léger (Aramco), préalablement partiellement démétallisé par un catalyseur d'hydrodémétallisation.

Les principales caractéristiques de ce résidu démétallisé sont reportées dans le tableau 7.

Tableau 7 : Caractéristiques de la charge utilisée pour les tests en HDS de résidus

| | Résidu sous vide démétallisé |
|---|---|
| Densité à 15°C (d$_4^{15}$) | 0,989 |

(suite)

|  | Résidu sous vide démétallisé |
|---|---|
| Soufre (% poids) | 2,3 |
| Ni (ppm poids) | 12 |
| V (ppm poids) | 18 |
| Asphaltènes C7 (% poids) | 3,9 |
| carbone conradson CCR (% poids) | 14 |
| N (ppm poids) | 3600 |

On traite cette charge sur une unité pilote d'hydrotraitement de résidus pétroliers comportant un réacteur à lit fixe fonctionnant en écoulement ascendant.

Après une étape de sulfuration, par circulation dans le réacteur d'une coupe distillat sous vide contenant 2% poids de soufre à une température finale de 350°C, on opère l'unité avec le résidu atmosphérique partiellement démétallisé décrit ci-dessus. Les conditions opératoires mises en oeuvre en début d'essai sont reportées dans le tableau 8.

Tableau 8 : Conditions opératoires de test en HDS de résidus sous vide

| Pression Totale : | 15 MPa |
|---|---|
| Température : | 370°C |
| Vitesse spatiale horaire du résidu : | 0,5 h$^{-1}$ |
| Rapport de débit $H_2$/HC (l/l) : | 1000 |
| Volume de catalyseur (cm$^3$) : | 40 |

Après 300 heures de stabilisation, les performances en hydrodésulfuration (HDS) et en réduction du CCR (HDCCR) sont calculées de la façon suivante :

$$- \quad \text{HDS (\% poids)} = [(\% \text{ poids S})_{charge} - (\% \text{poids S})_{recette}]/(\% \text{ poids S})_{charge} * 100$$

$$- \quad \text{HDCCR (\% poids)} = [(\% \text{ poids CCR})_{charge} - (\% \text{ poids CCR})_{recette}]/(\% \text{ poids CCR})_{charge} * 100$$

Le tableau 9 compare les performances des catalyseurs A', B et D en HDS et HDCCR de ce résidu sous vide.

Tableau 9 : Performances des catalyseurs en HDS et HDCCR de résidu sous vide

| Système catalytique | HDS (% poids) | HDCCR (% poids) |
|---|---|---|
| Catalyseur A' | 83 | 39 |
| Catalyseur B | 88 | 43 |
| Catalyseur D | 90 | 46 |

On constate que le catalyseur CoMo (D) préparé en une étape selon le procédé de l'invention, contenant, à l'état séché, le cobalt et le molybdène en forte interaction sous la forme d'un hétéropolyanion conduit après sulfuration à un catalyseur plus actif que le catalyseur A' conventionnel de même composition chimique non conforme. Le catalyseur D, préparé en une seule étape, démontre de meilleures performances en hydrodésulfuration et en réduction du CCR que celles obtenues par le catalyseur B préparé selon une méthode antérieure en deux étapes dont un échange ionique.

Exemple 9 : Préparation d'un catalyseur massique de type CoMo selon un procédé conforme à l'invention

En vue d'obtenir après évaporation à sec un solide de type CoMo, on prépare une solution comme décrit ci-dessous :

a) 18,7 g de MoO$_3$ sont dissous dans une solution de volume 62 ml contenant 68 g d'eau oxygénée (pureté 30%). Le ratio molaire H$_2$O$_2$/Mo est alors de 6.
b) La dissolution du MoO$_3$ est obtenue en environ 12 h à température ambiante. On obtient alors une solution de pH = 0,03.
c) Le carbonate de cobalt (7,6 g, pureté 99 %) est ensuite introduit précautionneusement par petites quantités pour éviter toute effervescence ; sa dissolution est immédiate. La solution obtenue a un pH de 3,5.

La solution est ensuite lentement évaporée à sec au rotavapeur à 70°C . Le solide obtenu est ensuite recueilli et placé à l'étuve à T = 27°C et P = 30 mbar pendant 1 h. La formulation du catalyseur G obtenu est la suivante : 78,0 poids en MoO$_3$ et 18 % poids en CoO. Le ratio molaire Co/Mo est de 0,44. Les analyses DRX montrent que le composé obtenu est cristallin.

Exemple 10 : Comparaison des catalyseurs A' et G de type CoMo en HDS du thiophène

Les catalyseurs A' et G précédemment décrit sont testés en HDS du thiophène. Le test est effectué en réacteur de type Grignard (réacteur batch) à 200 °C sous une pression de 3,5 MPa en hydrogène maintenue constante. La charge modèle est constituée par 1000 ppm de méthyl-3 thiophène et 10 % en poids de diméthyl 2,3-butène-2 dans du n-heptane. Le volume de solution est de 210 cm$^3$ à froid, la masse de catalyseur testée étant de 4 grammes (avant sulfuration). Le catalyseur A' a été broyé (315 - 1000 μm). Avant test, les catalyseurs son préalablement sulfurés en banc de sulfuration, sous mélange H2S/H2 (4 l/h, 15 % en vol d'H$_2$S) à 400 °C durant deux heures (rampe de 5 °C/min), puis réduit sous H2 pur à 200 °C durant deux heures. Les catalyseurs sont ensuite transférés dans le réacteur Grignard à l'abri de l'air. Les performances catalytiques des catalyseurs testés sont données dans le tableau 10. Elles sont exprimées en activité relative, en posant que celle du catalyseur A' est égale à 100 et en considérant qu'elles sont d'ordre 1,5 par rapport au soufre total. La relation liant l'activité et la conversion en hydrodésulfuration (%HDS) est la suivante :

$$\text{AHDS} = \sqrt{\frac{100}{(100 - \%HDS)}} - 1$$

Tableau 10 : activité HDS relative à iso-teneur en phase active des catalyseurs A' (non conforme) et G (conforme) en HDS du thiophène.

| Catalyseur | Activité HDS relative à iso-teneur en MoO$_3$ |
|---|---|
| A' | 100 % |
| G | 130 % |

Le tableau 10 montre le gain important d'activité HDS lié à l'emploi d'un catalyseur massique obtenu à partir de la solution conforme à l'invention.

**Revendications**

1.   Procédé de préparation d'une solution formée d'au moins un sel de cobalt et/ou de nickel d'au moins un hétéropolyanion combinant dans sa structure du molybdène et du cobalt ou du molybdène et du nickel, ledit procédé comprenant :

a) le mélange en solution aqueuse d'au moins une source de molybdène et d'au moins un composé oxydant jusqu'à l'obtention d'une solution aqueuse limpide présentant un pH inférieur à 5 conduisant à la formation à pH acide d'ions peroxomolybdates, le rapport molaire (composé oxydant / source de molybdène) étant compris entre 0,1 et 20, la source de molybdène utilisée étant l'oxyde de molybdène MoO3, ledit composé oxydant étant le peroxyde d'hydrogène,

b) l'introduction d'au moins un précurseur du cobalt et/ou d'au moins un précurseur de nickel dans la solution issue de l'étape a) de manière à former une solution comprenant au moins ledit sel dans lequel le rapport molaire (Co + Ni) / Mo soit compris entre 0,25 et 0,85.

2. Procédé selon la revendication 1 dans lequel lesdits ions peroxomolybdates sont présents à l'issue de ladite étape a) dans une solution aqueuse limpide ayant un pH inférieur à 2,5.

3. Procédé selon l'une des revendications 1 à 2 dans lequel le rapport molaire (composé oxydant / source de molybdène) dans la mise en oeuvre de ladite étape a) est compris entre 2 et 7.

4. Procédé selon l'une des revendications 1 à 3 dans lequel la solution formée à l'issue de ladite étape b) présente un pH supérieur à 3.

5. Procédé selon l'une des revendications 1 à 4 dans lequel le précurseur de cobalt et/ou le précurseur de nickel employé(s) dans ladite étape b) est(sont) choisi(s) dans le groupe constitué par les nitrates, les sulfates, les phosphates, les halogénures, les carboxylates comme les acétates, les carbonates, les hydroxydes et les oxydes.

6. Procédé selon l'une des revendications 1 à 5 dans lequel le précurseur de cobalt employé dans ladite étape b) est le carbonate de cobalt.

7. Procédé selon l'une des revendications 1 à 6 dans lequel le précurseur de nickel est l'hydroxycarbonate de nickel.

8. Procédé selon l'une des revendications 1 à 7 dans lequel au moins un précurseur de cobalt est introduit dans ladite solution issue de l'étape a) en l'absence de précurseur de nickel.

9. Procédé selon l'une des revendications 1 à 7 dans lequel au moins un précurseur de nickel est introduit dans ladite solution issue de l'étape a) en l'absence de précurseur de cobalt.

10. Procédé selon l'une des revendications 1 à 7 dans lequel au moins un précurseur de cobalt et au moins un précurseur de nickel sont introduits dans ladite solution issue de ladite étape a).

11. Procédé selon l'une des revendications 1 à 10 dans lequel ladite solution obtenue à l'issue de ladite étape b) présente un pH supérieur ou égal à 3,5.


**Patentansprüche**

1. Verfahren zur Herstellung einer Lösung, die aus mindestens einem Kobalt- und/oder Nickelsalz mindestens eines Heteropolyanions gebildet ist, das in seiner Struktur Molybdän und Kobalt oder Molybdän und Nickel vereint, wobei das Verfahren umfasst:

a) das Mischen in wässriger Lösung mindestens einer Molybdänquelle und mindestens einer oxidierenden Verbindung bis zum Erhalt einer klaren, wässrigen Lösung, die einen pH-Wert kleiner 5 aufweist, das bei saurem pH-Wert zur Bildung von Peroxomolybdationen führt, wobei das Molverhältnis (oxidierende Verbindung/Molybdänquelle) im Bereich zwischen 0,1 und 20 liegt, wobei die verwendete Molybdänquelle Molybdänoxid $MoO_3$ ist, wobei die oxidierende Verbindung Wasserstoffperoxid ist,

b) das Einführen mindestens eines Kobaltvorläufers und/oder mindestens eines Nickelvorläufers in die Lösung aus Schritt a), um eine Lösung zu bilden, die mindestens das Salz umfasst, wobei das Molverhältnis (Co+Ni)/Mo im Bereich zwischen 0,25 und 0,85 liegt.

2. Verfahren nach Anspruch 1, wobei die Peroxomolybdationen am Ende von Schritt a) in einer klaren wässrigen Lösung mit einem pH-Wert kleiner 2,5 vorhanden sind.

3. Verfahren nach einem der Ansprüche 1 bis 2, wobei das Molverhältnis (oxidierende Verbindung/Molybdänquelle) bei der Ausführung von Schritt a) im Bereich zwischen 2 und 7 liegt.

**4.** Verfahren nach einem der Ansprüche 1 bis 3, wobei die am Ende von Schritt b) gebildete Lösung einen pH-Wert größer 3 aufweist.

**5.** Verfahren nach einem der Ansprüche 1 bis 4, wobei der Kobaltvorläufer und/oder der Nickelvorläufer, der/die in Schritt b) verwendet werden, ausgewählt ist (sind) aus der Gruppe bestehend aus Nitraten, Sulfaten, Phosphaten, Halogeniden, Carboxylaten, wie beispielsweise Acetaten, Carbonaten, Hydroxiden und Oxiden.

**6.** Verfahren nach einem der Ansprüche 1 bis 5, wobei der in Schritt b) verwendete Kobaltvorläufer Kobaltcarbonat ist.

**7.** Verfahren nach einem der Ansprüche 1 bis 6, wobei der Nickelvorläufer Nickelhydroxycarbonat ist.

**8.** Verfahren nach einem der Ansprüche 1 bis 7, wobei mindestens ein Kobaltvorläufer in die Lösung aus Schritt a) in Abwesenheit von Nickelvorläufer eingeführt wird.

**9.** Verfahren nach einem der Ansprüche 1 bis 7, wobei mindestens ein Nickelvorläufer in die Lösung aus Schritt a) in Abwesenheit von Kobaltvorläufer eingeführt wird.

**10.** Verfahren nach einem der Ansprüche 1 bis 7, wobei mindestens ein Kobaltvorläufer und mindestens ein Nickelvorläufer in die Lösung aus Schritt a) eingeführt werden.

**11.** Verfahren nach einem der Ansprüche 1 bis 10, wobei die am Ende von Schritt b) erhaltene Lösung einen pH-Wert größer oder gleich 3,5 aufweist.

**Claims**

**1.** A process for preparing a solution formed by at least one cobalt and/or nickel salt of at least one heteropolyanion combining molybdenum and cobalt or molybdenum and nickel in its structure, said process comprising:

   a) mixing at least one source of molybdenum and at least one oxidizing compound in aqueous solution until a clear aqueous solution is obtained presenting a pH of less than 5 leading to the formation of peroxomolybdate ions at an acidic pH, the (oxidizing compound/molybdenum source) mole ratio being in the range 0.1 to 20; the molybdenum source used being molybdenum oxide $MoO_3$, said oxidizing compound being hydrogen peroxide,
   b) introducing at least one cobalt precursor and/or at least one nickel precursor into the solution from step a) to form a solution comprising at least said salt in which the (Co+Ni)/Mo mole ratio is in the range 0.25 to 0.85.

**2.** A process according to claim 1, in which said peroxomolybdate ions are present at the end of said step a) in a clear aqueous solution with a pH of less than 2.5.

**3.** A process according to one of claims 1 to 2, in which the (oxidizing compound/molybdenum source) mole ratio in carrying out said step a) is in the range 2 to 7.

**4.** A process according to one of claims 1 to 3, in which the solution formed at the end of said step b) has a pH of more than 3.

**5.** A process according to one of claims 1 to 4, in which the cobalt precursor and/or the nickel precursor used in said step b) is (are) selected from the group constituted by nitrates, sulphates, phosphates, halides, carboxylates such as acetates, carbonates, hydroxides and oxides.

**6.** A process according to one of claims 1 to 5, in which the cobalt precursor employed in said step b) is cobalt carbonate.

**7.** A process according to one of claims 1 to 6, in which the nickel precursor is nickel hydroxycarbonate.

**8.** A process according to one of claims 1 to 7, in which at least one cobalt precursor is introduced into said solution from step a) in the absence of a nickel precursor.

**9.** A process according to one of claims 1 to 7, in which at least one nickel precursor is introduced into said solution from step a) in the absence of a cobalt precursor.

**10.** A process according to one of claims 1 to 7, in which at least one cobalt precursor and at least one nickel precursor are introduced into said solution from said step a).

**11.** A process according to one of claims 1 to 10, in which said solution obtained at the end of said step b) has a pH of 3.5 or more.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2547380 A
- FR 2759778 A
- EP 1393802 A
- FR 2813050
- EP 1393802 A1

**Littérature non-brevet citée dans la description**

- *Journal of Catalysis,* 1999, vol. 188 (1), 102-110
- *de Applied Catalysis A : General,* 2001, vol. 220, 113-121
- *Chemistry Materials,* 2005, vol. 17, 4438-4448
- *Nature,* 1937, (140), 850
- *Chemistry Materials,* 2005, vol. 17, 4438-4448
- *Inorganic Chemistry,* 2004, vol. 43, 4636
- Zéolite Molecular Sieves Structure. Chemistry and Uses. D.W. BRECK, J.WILLEY and sons, 1973